# EUROPEAN PATENT SPECIFICATION

(11) **EP 1 609 649 B1**
(45) Date of publication and mention of the grant of the patent: **06.06.2012**
(21) Application number: 04102848.1
(22) Date of filing: 21.06.2004
(51) Int. Cl.: B60J 7/057

(54) **Open roof construction for a vehicle**
Öffnungsfähige Dachkonstruktion für ein Fahrzeug
Construction de toit ouvrant pour un véhicule

(43) Date of publication of application: 28.12.2005
(73) Proprietor: Inalfa Roof Systems Group B.V., 5804 AH Venray (NL)
(72) Inventor: Wilms, Bernd, 41334 Nettetal (DE); Feijts, Pascal, Jozef, Maria, 6042 JD Roermond (NL); Spronk, Eric, 5691 ZN Son (NL)
(74) Representative: Voncken, Bartholomeus Maria Ch.

(56) References cited:
- EP-A- 0 175 194
- EP-A- 0 368 404
- FR-A- 2 841 315
- PATENT ABSTRACTS OF JAPAN vol. 0101, no. 18 (M-475), 2 May 1986 (1986-05-02) -& JP 60 248430 A (JIYOUNAN SEISAKUSHO:KK), 9 December 1985 (1985-12-09)
- PATENT ABSTRACTS OF JAPAN vol. 0101, no. 18 (M-475), 2 May 1986 (1986-05-02) -& JP 60 248431 A (JIYOUNAN SEISAKUSHO:KK), 9 December 1985 (1985-12-09)

## Description

The invention relates to an open roof construction for a vehicle according to the preambe of claim 1.

Generally, because the closure means will move relative to the stationary roof part when moving from its closed position towards its open position and visa versa, the linings of the closure means and of the stationary roof part are separate parts. A disadvantage of such separate linings is, that seams are present between these two linings which negatively influence the esthetical appearance of the open roof construction. EP-A-0368404 shows the closest state of the art.

In line with the above it is an object of the present invention to provide an improved open roof construction of the type referred to above.

Thus, in line with the present invention there is provided an open roof construction for a vehicle in accordance with claim 1.

Because the lining of the stationary roof part and the lining of the closure means are interconnected at the mentioned transversal side edge of the roof opening, at least at that location no disturbing seam is present. The guide means ensures that, notwithstanding the relative movement between the closure means and the stationary roof part, the lining of the closure means will remain in a position in which it properly lines the closure means.

Preferably, said guide means at least comprises a reversal member positioned near to the edge of the closure means facing the second, opposite transversal side edge of the roof opening, and drive means for moving the excess length of the closure means lining around said reversal member and in between the closure means and its lining.

The reversal member ensures, that the excess length of the closure means, which will be created when the closure means moves towards its opened position, is positioned between the closure means and its lining, such that it is not visible and cannot negatively influence the appearance of the closure means (or open roof construction in its entirety). The drive means is meant for moving the excess length of the closure means lining around said reversal member.

Further, the reversal member may comprise at least one roller. But also, the reversal member may comprise a number of rollers positioned one aside another.

In one embodiment, the drive means comprises a drive member which is movable longitudinally and which engages the free end of the excess length of the closure means lining. Longitudinally means longitudinally relative to the vehicle.

Such an embodiment of the open roof construction still further may be improved, when between the drive means and said free end a tensioning means, such as a tension spring or alike, is positioned.

Such a tensioning means ensures that the lining of the closure means always will be taut in all positions of the latter.

As an example of a drive means a drive cable driven by an electric motor may be mentioned.

It is generally known, that a closure means of an open roof construction may be movable by means of an electric motor. Thus, in accordance with the present invention, such an electric motor may be used for driving the closure means as well as for driving the excess length of the closure means lining.

Because the excess length of the closure means lining moves around the reversal member, it will have a speed twice as large as the speed of the moving closure means. Thus, appropriate transmission gears should be applied for ensuring that the electric motor will drive the closure means and the excess length of the closure means lining with corresponding different speeds.

As an alternative for the drive means a rotatable winding member may be applied, such as a winding shaft or alike, attached to the closure means for winding thereon the excess length of the closure means lining.

Whereas, generally, the electric motor is attached to a stationary part of the vehicle, such a winding shaft will be attached to the closure means and will move along therewith.

Preferably, the winding member is, pre-loaded in its direction for winding on, such that a separate drive member for the winding member is not needed.

Finally, said first transversal side edge of the roof opening preferably is the rear edge of the roof opening, as considered in the normal direction of movement of said vehicle. In such a preferred embodiment, the closure means will move rearwardly when moving from its closed towards its opened position. This is the common direction of movement for such a closure means.

Hereinafter the invention will be elucidated while referring to the drawing, in which embodiments of the open roof construction in accordance with the present invention are illustrated.
Figure 1 shows, schematically, a longitudinal cross-section of an open roof construction in accordance with the present invention, in a closed position;
figure 2 shows in a view corresponding to figure 1 the open roof construction in a partly opened position, and
figure 3 shows, again in a corresponding view, an alternative embodiment of an open roof construction according to the present invention in a partly opened position.

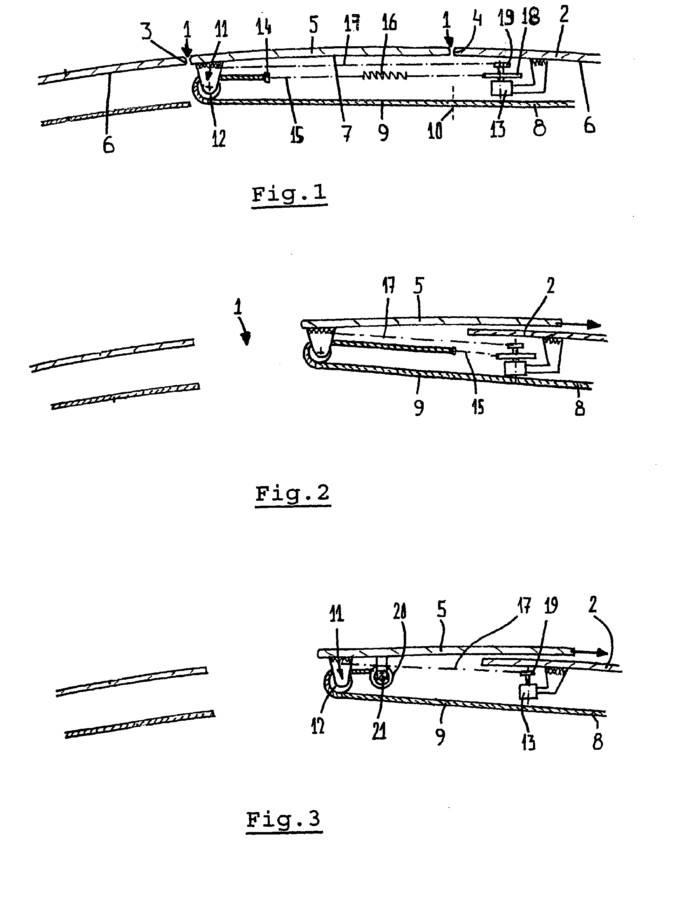

Firstly referring to figure 1, part of an open roof construction for a vehicle is shown in a longitudinal cross-section. The open roof construction comprises a roof opening 1 (best seen in figure 2) provided in a stationary roof part 2 of the vehicle. The roof opening comprises longitudinal side edges (not visible in the figures) and two transversal side edges 3 and 4. In the illustrated embodiment transversal side edge 4 is the rear edge of the roof opening 1, as considered in the normal direction of movement of the vehicle.

The open roof construction further comprises a closure means 5 (for example a panel) which is movable between a closed position (illustrated in figure 1) in which it closes said roof opening 1, and an opened position in which it opens said roof opening 1.

The stationary roof part 2 has a lower side 6, whereas the closure means correspondingly has a lower side 7.

The lower side 6 of the stationary roof part 2 is provided with a lining 8 which is attached thereto by means not shown in detail. In a corresponding manner the lower side 7 of the closure means 5 is provided with a lining 9.

As is illustrated clearly in figure 1, the lining 8 of the stationary roof part 2 and the lining 9 of the closure means 5 are integrally interconnected near to the transversal side edge 4 of the roof opening 1. The location of the integral interconnection between both linings 8 and 9 (which, basically, is an imaginary interconnection because both parts are integrally shaped) is indicated in figure 1 by a dotted line 10.

Connected to the closure means 5 is a reversal member 11 comprising a roller 12. The free end of the lining 9 of the closure means 5 extends around said roller 12 in the spacing between the lining 9 and the closure means 5.

A drive means, for example an electric motor 13 which is attached to a stationary part of the vehicle (for example the stationary roof part 2) connects to the free end 14 of the lining 9 by means of (in the present embodiment) a drive cable 15. Further, said drive cable 15 comprises a tensioning means, such as a tension spring 16.

The electric motor 13 further connects to the closure means 5, in the illustrated embodiment to the reversal member 11 which is attached to the closure means 5, by means of a second drive cable 17. The drive cables 15 and 17 cooperate with pulleys 18 and 19, respectively, connected to the electric motor 13.

In figure 1 the closure means 5 assumes its closed position, in which the roof opening 1 is closed. The lining 9 extending around the roller 12 of the reversal member 11 (almost) engages the lining 8 of the stationary roof part 2 at the location of the forward transversal side edge 3 of the roof opening 1.

When the closure means 5 has to be moved towards an opened position, the electric motor 13 is activated, such that the drive cable 17 moves the closure means 5 towards its opened position (to the right in figure 2). At the same time, drive cable 15 moves the excess length of the lining 9 of the closure means 5 around the reversal roller 12 into the spacing between the lining 9 and the closure means 5. Because the speed of the free end 14 of the excess length of the lining 9 is twice the speed of the closure panel 5, pulley 18 will have a corresponding larger diameter than pulley 19.

Any slack of the excess length of the lining 9 positioned between the lining 9 and the closure means 5 will be accommodated for by the tension spring 16.

Figure 2 shows an intermediate position, in which the closure means 5 already has moved partly towards its opened position. It is clearly visible, that part of the lining 9 has moved around the roller 12 into the spacing between the lining 9 and the closure means 5. It is noted, that in figure 2 the tension spring 16 has not been illustrated, but still will be present.

Figure 3 illustrates an alternative embodiment of the open roof construction in accordance with the present invention. In this embodiment the electric motor 13 only is meant for driving the closure means 5 by means of drive cable 17. Drive cable 15 has been omitted, and instead a rotatable winding member 20 is attached to the closure means 5. Said rotatable winding member for example is a winding shaft which is pre-loaded in its direction for winding thereon the excess length of the lining 9. Such a pre-load can be created by a torsion spring 21 or alike.

When the electric motor 13 is activated for moving the closure means 5 from its closed position towards its opened position, the excess length of the lining 9 will be wound unto the rotatable winding member automatically. In an opposite sense, when moving the closure means 5 again towards its closed position the excess length of the lining 9 of the closure means 5 will be wound of from the winding member, until a position is reached which basically corresponds to the position of the lining 9 as illustrated in figure 1 of the previous embodiment.

The invention is not limited to the embodiments described before, which may be varied widely within the scope of the invention as defined by the appending claims.

## Claims

1. Open roof construction for a vehicle, comprising a roof opening (1) with longitudinal and transversal side edges (3,4) provided in a stationary roof part (2) of the vehicle and a closure means (5) which is movable between a closed position for closing said roof opening and an opened position for opening said roof opening, wherein the stationary roof part (2) and the closure means (5) each have a lower side (6,7) facing a passenger compartment of the vehicle, which lower sides each are provided with a lining (8,9), wherein the closure means is provided with guide means (11,12) for moving the closure means lining (9) relative to the closure means **characterized in that** the lining (8) of the stationary roof part (2) and the lining (9) of the closure means (5) are integrally interconnected at a first transversal side edge (4) of the roof opening (1) towards which the closure means will move when moving from the closed position towards the opened position, and wherein the guide means (11,12) are adapted for leading an excess length of said means lining (9) in between said lining (9) and the closure means (5) when the closure means moves towards the opened position.

2. Open roof construction according to claim 1, wherein said guide means at least comprises a reversal member (11) positioned near to the edge of the closure means (5) facing the second, opposite transversal side edge (3) of the roof opening (1), and drive means for moving the excess length of the closure means lining (9) around said reversal member and in between the closure means (5) and its lining (9).

3. Open roof construction according to claim 2, wherein the reversal member (11) comprises at least one roller (12).

4. Open roof construction according to claim 2 or 3, wherein the drive means comprises a drive member which is movable longitudinally and which engages the free end (14) of the excess length of the closure means lining (9)

5. Open roof construction according to claim 4, wherein between the drive means and said free end (14) a tensioning means, such as a tension spring (16) or alike, is positioned.

6. Open roof construction according to claim 4 or 5, wherein the drive means is a drive cable (15) driven by an electric motor (13).

7. Open roof construction according to claim 6, wherein the closure means (5) is movable by means of the same electric motor (13) as is used for driving the excess length of the closure means lining (9).

8. Open roof construction according to claim 2 or 3, wherein the drive means comprises a rotatable winding member (20) such as a winding shaft or alike, attached to the closure means (5) for winding thereon the excess length of the closure means lining (9).

9. Open roof construction according to claim 8, wherein the winding member (20) is pre-loaded in its direction for winding on.

10. Open roof construction according to any of the previous claims, wherein said first transversal side edge (4) of the roof opening (1) is the rear edge of the roof opening, as considered in the normal direction of movement of said vehicle.

## Patentansprüche

1. Offendachkonstruktion für ein Fahrzeug, aufweisend eine Dachöffnung (1) mit longitudinalen und transversalen Seitenrändern (3, 4), die in einem stationären Dachteil (2) des Fahrzeugs vorgesehen ist, und ein Schließmittel (5), das zwischen einer Schließposition zum Schließen der Dachöffnung und einer Öffnungsposition zum Öffnen der Dachöffnung bewegbar ist, wobei der stationäre Dachteil (2) und das Schließmittel (5) eine Unterseite (6, 7) aufweisen, die einem Fahrgastraum des Fahrzeugs zugewandt ist, wobei die Unterseiten jeweils mit einer Auskleidung (8, 9) versehen sind, wobei das Schließmittel mit Führungsmitteln (11, 12) zum Bewegen der Schließmittelauskleidung (9) bezüglich des Schließmittels versehen ist, **dadurch gekennzeichnet, dass** die Auskleidung (8) das stationären Dachteils (2) und die Auskleidung (9) des Schließmittels (5) an einem ersten transversalen Seitenrand (4) der Dachöffnung (1), in dessen Richtung sich das Schließmittel bewegen wird, wenn es sich aus der Schließposition in Richtung zu der Öffnungsposition bewegt, einstückig miteinander verbunden sind, und wobei die Führungsmittel (11, 12) angepasst sind, um eine überschüssige Länge der Schließmittelauskleidung (9) zwischen der Auskleidung (9) und dem Schließmittel (5) zu führen, wenn sich das Schließmittel in Richtung zu der Öffnungsposition bewegt.

2. Offendachkonstruktion gemäß Anspruch 1, wobei das Führungsmittel aufweist: mindestens ein Umkehrelement (11), das in der Nähe des Randes des Schließmittels (5) positioniert ist, der dem zweiten, gegenüberliegenden transversalen Seitenrand (3) der Dachöffnung (1) zugewandt ist, und ein Antriebsmittel zum Bewegen der überschüssigen Länge der Schließmittelauskleidung (9) um das Umkehrelement und zwischen dem Schließmittel (5) und seiner Auskleidung (9).

3. Offendachkonstruktion gemäß Anspruch 2, wobei das Umkehrelement (11) mindestens eine Rolle (12) aufweist.

4. Offendachkonstruktion gemäß Anspruch 2 oder 3, wobei das Antriebsmittel ein Antriebselement aufweist, das in Längsrichtung bewegbar ist und mit dem freien Ende (14) der überschüssigen Länge der Schließmittelauskleidung (9) in Eingriff ist.

5. Offendachkonstruktion gemäß Anspruch 4, wobei zwischen dem Antriebsmittel und dem freien Ende (14) ein Spannmittel, zum Beispiel eine Spannfeder (16) oder dergleichen positioniert ist.

6. Offendachkonstruktion gemäß Anspruch 4 oder 5, wobei das Antriebsmittel ein Antriebsseil (15) ist, das durch einen Elektromotor (13) angetrieben ist.

7. Offendachkonstruktion gemäß Anspruch 6, wobei das Schließelement (5) mittels des gleichen Elektromotors (13) bewegbar ist, wie zum Antreiben der überschüssigen Länge der Schließmittelauskleidung (9) verwendet wird.

8. Offendachkonstruktion gemäß Anspruch 2 oder 3, wobei das Antriebsmittel ein drehbares Wickelelement (20), zum Beispiel eine Wickelwelle oder dergleichen aufweist, das an dem Schließmittel (5) angebracht ist, um die überschüssige Länge der Schließmittelauskleidung (9) darauf aufzuwickeln.

9. Offendachkonstruktion gemäß Anspruch 8, wobei das Wickelelement (20) in seiner Aufwickelrichtung vorgespannt ist.

10. Offendachkonstruktion gemäß irgendeinem der vorhergehenden Ansprüche, wobei der erste transversale Seitenrand (4) der Dachöffnung (1) in der normalen Bewegungsrichtung des Fahrzeugs betrachtet der hintere Rand der Dachöffnung ist.

## Revendications

1. Construction de toit ouvrant pour un véhicule, comprenant une ouverture de toit (1) avec des bords longitudinaux et transversaux (3, 4) prévus dans une partie de toit stationnaire (2) du véhicule et des moyens de fermeture (5) qui sont mobiles entre une position fermée pour fermer ladite ouverture de toit et une position ouverte pour ouvrir ladite ouverture de toit, dans laquelle la partie de toit stationnaire (2) et les moyens de fermeture (5) comportent chacun un côté inférieur (6, 7) faisant face à un habitacle du véhicule, lesquels côtés inférieurs sont chacun pourvus d'un revêtement (8, 9), dans laquelle les moyens de fermeture sont pourvus de moyens de guidage (11, 13) pour déplacer le revêtement de moyens de fermeture (9) par rapport aux moyens de fermeture, **caractérisée en ce que** le revêtement (8) de la partie de toit stationnaire (2) et le revêtement (9) des moyens de fermeture (5) sont reliés mutuellement et d'un seul tenant au niveau d'un premier bord latéral transversal (4) de l'ouverture de toit (1) vers lequel les moyens de fermeture se déplaceront lors du déplacement à partir de la position fermée vers la position ouverte, et dans laquelle les moyens de guidage (11, 12) sont adaptés pour conduire un excès de longueur dudit revêtement de moyens de fermeture (9) entre ledit revêtement (9) et les moyens de fermeture (5) lorsque les moyens de fermeture se déplacent vers la position ouverte.

2. Construction de toit ouvrant selon la revendication 1, dans laquelle lesdits moyens de guidage comprennent au moins un élément d'inversement (11) positionné près du bord des moyens de fermeture (5) faisant face au second bord latéral transversal opposé (3) de l'ouverture de toit (1), et des moyens d'entraînement pour déplacer l'excès de longueur du revêtement de moyens de fermeture (9) autour dudit élément d'inversement et entre les moyens de fermeture (5) et leur revêtement (9).

3. Construction de toit ouvrant selon la revendication 2, dans laquelle l'élément d'inversement (11) comprend au moins un rouleau (12).

4. Construction de toit ouvrant selon la revendication 2 ou 3, dans laquelle les moyens d'entraînement comprennent un élément d'entraînement qui est mobile longitudinalement et qui entre en prise avec l'extrémité libre (14) de l'excès de longueur du revêtement de moyens de fermeture (9).

5. Construction de toit ouvrant selon la revendication 4, dans laquelle, entre les moyens d'entraînement et ladite extrémité libre (14), des moyens tendeurs, tels qu'un ressort de tension (16) ou analogue, sont positionnés.

6. Construction de toit ouvrant la revendication 4 ou 5, dans laquelle les moyens d'entraînement sont un câble d'entraînement (15) entraîné par un moteur électrique (13).

7. Construction de toit ouvrant selon la revendication 6, dans laquelle les moyens de fermeture (5) sont mobiles grâce au même moteur électrique (13) qui est utilisé pour entraîner l'excès de longueur du revêtement de moyens de fermeture (9).

8. Construction de toit ouvrant la revendication 2 ou 3, dans laquelle les moyens d'entraînement comprennent un élément d'enroulement rotatif (20), tel qu'un arbre d'enroulement ou analogue, fixé aux moyens de fermeture (5) pour enrouler sur celui-ci l'excès de longueur du revêtement de moyens de fermeture (9).

9. Construction de toit ouvrant selon la revendication 8, dans laquelle l'élément d'enroulement (20) est préalablement chargé dans sa direction pour l'enroulement sur celui-ci.

10. Construction de toit ouvrant selon une quelconque des revendications précédentes, dans laquelle ledit premier bord latéral transversal (4) de l'ouverture de toit (1) est le bord arrière de l'ouverture de toit, conformément à la direction normale de mouvement dudit véhicule.
